# EUROPÄISCHE PATENTSCHRIFT

(11) **EP 3 807 672 B1**
(45) Veröffentlichungstag und Bekanntmachung des Hinweises auf die Patenterteilung: **15.03.2023**
(21) Anmeldenummer: 19733955.9
(22) Anmeldetag: 04.06.2019
(51) Int. Cl.: G01S 17/93, G01S 7/481, G01S 7/497, G02B 26/10, G02B 26/08

(54) **VERFAHREN ZUR STEUERUNG EINER ANTRIEBSEINRICHTUNG EINES MIKROSCHWINGSPIEGELS, STEUERVORRICHTUNG UND UMLENKSPIEGELEINRICHTUNG**
METHOD FOR CONTROLLING A DRIVE DEVICE OF A MICRO-OSCILLATION MIRROR, CONTROL APPARATUS AND DEFLECTION MIRROR DEVICE
PROCÉDÉ DE COMMANDE D'UN DISPOSITIF D'ENTRAÎNEMENT D'UN MICROMIROIR OSCILLANT, DISPOSITIF DE COMMANDE ET SYSTÈME DE MIROIR DE RENVOI

(30) Priorität: 15.06.2018 DE 102018114388
(43) Veröffentlichungstag der Anmeldung: 21.04.2021
(73) Patentinhaber: Valeo Schalter und Sensoren GmbH, 74321 Bietigheim-Bissingen (DE)
(72) Erfinder: NIES, Jürgen, 74321 Bietgiheim-Bissingen (DE); SCHENK, Jochen, 74321 Bietigheim-Bissingen (DE); KLEISER, Michael, 74321 Bietigheim-Bissingen (DE)
(74) Vertreter: Pothmann, Karsten
(86) Internationale Anmeldenummer: PCT/EP2019/064435
(87) Internationale Veröffentlichungsnummer: WO 2019/238467

(56) Entgegenhaltungen:
- DE-A1-102014 220 115
- GB-A- 2 528 847
- US-A1- 2003 174 382

## Beschreibung

### Technisches Gebiet

Die Erfindung betrifft ein Verfahren zur Steuerung einer Antriebseinrichtung eines Mikroschwingspiegels, bei dem
- wenigstens ein Ansteuersignal erzeugt und damit die Antriebseinrichtung so angesteuert wird, dass diese den Mikroschwingspiegel schwingend antreibt,
- wenigstens ein die Auslenkung des Mikroschwingspiegels charakterisierendes Positionssignal erfasst wird,
- das wenigstens eine Ansteuersignal auf Basis des wenigstens einen Positionssignals so geregelt wird, dass der Mikroschwingspiegel in seiner Resonanzfrequenz angetrieben wird.

Ferner betrifft die Erfindung eine Steuervorrichtung zur Steuerung wenigstens einer Antriebseinrichtung eines Mikroschwingspiegels,
- mit wenigstens einer Signalerzeugungseinrichtung zur Erzeugung wenigstens eines Ansteuersignals, mit welchem die wenigstens eine Antriebseinrichtung angesteuert werden kann,
- mit wenigstens einer Positionserfassungseinrichtung, mit welcher wenigstens ein Positionssignal erfasst werden kann, welches eine Auslenkung des Mikroschwingspiegels charakterisiert,
- und mit wenigstens einer Einrichtung, welche mit der wenigstens einen Signalerzeugungseinrichtung regelbar so verbunden ist, dass der Mikroschwingspiegel in seiner Resonanzfrequenz angetrieben werden kann.

Außerdem betrifft die Erfindung eine Umlenkspiegeleinrichtung einer optischen Detektionsvorrichtung mit
- wenigstens einem Mikroschwingspiegel,
- wenigstens einer Antriebseinrichtung für den wenigstens einen Mikroschwingspiegel und
- einer Steuervorrichtung zur Steuerung der wenigstens einen Antriebseinrichtung,
- wobei die Steuervorrichtung aufweist
- wenigstens eine Signalerzeugungseinrichtung zur Erzeugung wenigstens eines Ansteuersignals, mit welchem die wenigstens eine Antriebseinrichtung angesteuert werden kann,
- wenigstens eine Positionserfassungseinrichtung, mit welcher wenigstens ein Positionssignal erfasst werden kann, welches eine Auslenkung des Mikroschwingspiegels charakterisiert,
- und wenigstens eine Einrichtung, welche mit der wenigstens einen Signalerzeugungseinrichtung regelbar so verbunden ist, dass der Mikroschwingspiegel in seiner Resonanzfrequenz angetrieben werden kann.

### Stand der Technik

Aus der EP 2 514 211 B1 ist eine Ablenkeinheit bekannt, die als Ablenkelement einen zweilagigen, kardanisch aufgehängten Mikrospiegel umfasst. Die Ablenkeinheit beziehungsweise der Mikrospiegel wird von einem von einer Ansteuervorrichtung gelieferten Ansteuersignal für jede Achse mit Frequenzen f1 und f2 als Ansteuerfrequenzen angetrieben. Diese Ansteuerfrequenzen f1, f2 sollen Resonanzfrequenzen des Spiegels entsprechen. Damit der Spiegel auch bei Änderung seiner Resonanzfrequenz dieser nachgeführt werden kann, weist die Ansteuervorrichtung einen Phasenregelkreis auf, der die Phase und damit die Ansteuerfrequenz der Ansteuersignale so nachregelt, dass der Spiegel im Wesentlichen bei Resonanz arbeitet. Zur Erfassung der Phasenlage ist eine Messvorrichtung vorgesehen, die die sinusförmige Auslenkung des Mikrospiegels misst.

DE 10 2014 220 115 offenbart ein Verfahren zum Ansteuern mindestens einer Ablenkeinheit, wobei die Ablenkeinheit einen Mikrospiegel umfasst. Die Bestimmung eines Verkippwinkels erfolgt kapazitiv. Eine Bewegung von fingerförmigen Kapazitäten erzeugt einen Strom, dessen Signalform eine Amplitudenmodulation des Trägersignals darstellt. In der Amplitudenmodulation ist die Information über die Spiegelbewegung enthalten.

GB 2 528 847 offenbart ein Verfahren zur Ermittlung von Wellenformparametern. Dazu werden unter anderem jene Stellen eines Wellensignals bestimmt, bei dem das Signal einen Schwellwert überschreitet.

US 2003 0174382 offenbart ein Verfahren zur Steuerung eines 2D Mikroaktuators, wobei der Mikroaktuator einen oszillierenden Spiegel aufweist. Die Schwingung des Spiegels wird mittels einer kapazitiven Messung erfasst.

Der Erfindung liegt die Aufgabe zugrunde, ein Verfahren, eine Steuervorrichtung und eine Umlenkspiegeleinrichtung der eingangs genannten Art zu gestalten, bei denen eine Regelung der Antriebseinrichtung des Mikroschwingspiegels vereinfacht, insbesondere mit einfacheren technischen Mitteln, realisiert werden kann.

### Offenbarung der Erfindung

Diese Aufgabe wird bei dem Verfahren erfindungsgemäß dadurch gelöst, dass die Amplitude des wenigstens einen Positionssignals fortwährend mit wenigstens einem Schwellwert verglichen wird und wenigstens ein Zeitintervall zwischen wenigstens zwei Durchläufen des wenigstens einen Positionssignals durch wenigstens einen Schwellwert bestimmt wird und ausgehend von dem wenigstens einen Zeitintervall das wenigstens eine Ansteuersignal geregelt wird.

Erfindungsgemäß wird die Auslenkung des Mikroschwingspiegels durch wenigstens ein Positionssignal charakterisiert. Das wenigstens eine Positionssignal wird fortwährend erfasst, sodass ein zeitlicher Verlauf der Amplitude des wenigstens einen Positionssignals den zeitlichen Verlauf der Spiegelauslenkung des Mikroschwingspiegels charakterisiert. Die Amplitude des wenigstens einen Positionssignals wird fortwährend mit wenigstens einem Schwellwert verglichen. Wenigstens ein Zeitintervall zwischen wenigstens zwei Durchläufen des wenigstens einen Positionssignals durch den wenigstens einen Schwellwert wird bestimmt. Anhand des wenigstens einen Zeitintervalls kann eine Schwingungsfrequenz und/oder eine Amplitude der Auslenkung des schwingenden Mikroschwingspiegels bestimmt werden. Das wenigstens eine Ansteuersignal wird auf Basis des wenigstens einen Zeitintervalls so nachgeregelt, dass der Mikroschwingspiegel mit der Antriebseinrichtung in seiner Resonanzfrequenz angetrieben wird.

In der Resonanzfrequenz kann der Mikroschwingspiegel effizient angetrieben werden.

Vorteilhafterweise kann die Amplitude des wenigstens einen Positionssignals mit wenigstens zwei Schwellwerten verglichen werden. Auf diese Weise kann die Genauigkeit der Regelung der Antriebseinrichtung verbessert werden.

Vorteilhafterweise kann wenigstens ein Zeitintervall zwischen wenigstens zwei Durchläufen des wenigstens einen Positionssignals durch unterschiedliche Schwellwerte bestimmt werden. Auf diese Weise können Steigungen des Amplitudenverlaufs des wenigstens einen Positionssignals ermittelt werden.

Vorteilhafterweise kann der angetriebene Mikroschwingspiegel eine sinusförmige Schwingung durchführen. Dabei kann der Mikroschwingspiegel in wenigstens einer Schwingungsrichtung mittels der Antriebseinrichtung aktiv angetrieben werden. Eine aktive Auslenkung des Mikroschwingspiegels kann durch das wenigstens eine Ansteuersignal mittels der Antriebseinrichtung hervorgerufen werden. Dabei entsteht eine ansteigende Flanke der Schwingung des Mikroschwingspiegels. Nach Wegnahme des Pulses des Ansteuersignals wird der Mikroschwingspiegel aufgrund seiner Trägheit bis zum Erreichen einer Maximalauslenkung ausgelenkt. Während der aktiven Auslenkung des Mikroschwingspiegels kann eine elastische Rückstelleinrichtung insbesondere in Form wenigstens einer Rückstellfeder vorgespannt werden. Die Rückstelleinrichtung kann Teil der Antriebseinrichtung sein. Nach Erreichen der Maximalauslenkung kann der Mikroschwingspiegel mittels der Rückstelleinrichtung zurückgeschwenkt werden. Dabei entsteht eine absteigende Flanke der Schwingung des Mikroschwingspiegels.

In der ansteigenden Flanke der Schwingung des Mikroschwingspiegels kann ein Anstiegspuls des wenigstens einen Positionssignals erfasst werden. In der absteigenden Flanke kann ein Abstiegspuls des wenigstens einen Positionssignals erfasst werden. Der Maximalwert des Anstiegspulses, welche auch als Anstiegsmaximum bezeichnet werden kann, kann aufgrund der aktiven Ablenkung des Mikroschwingspiegels mit der Antriebseinrichtung dort größer sein als der Maximalwert des Abstiegspulses, welche auch als Abstiegsmaximum bezeichnet werden kann, und die lediglich durch die Rückstelleinrichtung hervorgerufen wird.

Die Maximalwerte der Amplituden des wenigstens einen Positionssignals im Sinne der Erfindung beziehen sich auf die gleiche Seite des Nulldurchgangs des wenigstens einen Positionssignals. Insbesondere können sich die Maximalwerte auf die positive Seite des wenigstens einen Positionssignals beziehen. Alternativ können sämtliche Schwellwerte und die Maximalwerte sich auch auf der bezüglich dem Nulldurchgang des wenigstens einen Positionssignals negativen Seite befinden.

Der Mikroschwingspiegel kann Teil einer optischen Detektionsvorrichtung zur Erfassung von Objekten sein.

Vorteilhafterweise kann die optische Detektionsvorrichtung ein scannendes System, insbesondere ein Laserscanner, sein. Dabei kann mit Sendesignalen ein Überwachungsbereich abgetastet, also abgescannt, werden. Dazu können die entsprechenden Sendesignale, insbesondere Sendestrahlen, bezüglich ihrer Ausbreitungsrichtung über den Überwachungsbereich sozusagen geschwenkt werden. Hierbei kann wenigstens eine Umlenkspiegeleinrichtung zum Einsatz kommen, welche wenigstens einen Mikroschwingspiegel mit einer entsprechenden Steuervorrichtung und einer entsprechenden Antriebseinrichtung enthalten kann.

Die Erfindung kann bei einem Fahrzeug, insbesondere einem Kraftfahrzeug, verwendet werden. Vorteilhafterweise kann die Erfindung bei einem Landfahrzeug, insbesondere einem Personenkraftwagen, Lastkraftwagen, einem Bus, einem Motorrad oder dergleichen, einem Luftfahrzeug und/oder einem Wasserfahrzeug verwendet werden. Die Erfindung kann auch bei autonomen oder wenigstens teilweise autonomen Fahrzeugen eingesetzt werden.

Die Detektionsvorrichtung kann vorteilhafterweise mit wenigstens einer elektronischen Steuervorrichtung eines Fahrzeugs, insbesondere einem Fahrerassistenzsystem und/oder einer Fahrwerksregelung und/oder einer Fahrer-Informationseinrichtung und/oder einem Parkassistenzsystem oder dergleichen, verbunden oder Teil einer solchen sein.

Bei einer vorteilhaften Ausgestaltung des Verfahrens kann wenigstens ein Schwellwert konstant vorgegeben werden und/oder wenigstens ein Schwellwert kann variabel eingestellt werden.

Konstante Schwellwerte können einfach gespeichert werden.

Variable Schwellwerte haben den Vorteil, dass sie an eine Betriebssituation der Antriebseinrichtung angepasst werden können. So kann die Regelung insgesamt verbessert werden kann. Eine Anpassung des wenigstens einen Schwellwerts kann auch während des Betriebs des Mikroschwingspiegels erfolgen. Auf diese Weise können insbesondere bauteilbedingte und/oder montagebedingte Toleranzen der Antriebseinrichtung und/oder des Mikroschwingspiegels ausgeglichen werden. Insbesondere beim Anfahren des Mikroschwingspiegels können durch variable Schwellwerte Toleranzen besser ausgeglichen werden.

Bei einer weiteren vorteilhaften Ausgestaltung des Verfahrens kann ein Nulldurchgang des wenigstens einen Positionssignals als ein Schwellwert vorgegeben werden,
- und/oder wenigstens ein Schwellwert kann zwischen Maximalwerten der Amplitude des wenigstens einen Positionssignals vorgegeben werden,
- und/oder wenigstens ein Schwellwert kann amplitudenmäßig unterhalb den Maximalwerten der Amplituden von unterschiedlichen Pulsen des wenigstens einen Positionssignals vorgegeben werden,
- wobei die Maximalwerte der Amplitude der Pulse des wenigstens einen Positionssignals mit gleichem Vorzeichen während einer Periode des wenigstens einen Positionssignals auftreten.

Der Nulldurchgang des wenigstens einen Positionssignal kann einfach ermittelt werden, sodass der entsprechende Schwellwert einfach realisiert werden kann.

Ein Schwellwert, welcher amplitudenmäßig zwischen zwei Maximalwerten der Amplitude von unterschiedlichen Pulsen des wenigstens einen Positionssignals vorgegeben ist, kann dazu verwendet werden, eine Periode der Schwingung des Mikroschwingspiegels zu erfassen. Dabei sind die Maximalwerte der unterschiedlichen Pulse unterschiedlich groß.

Vorteilhafterweise kann einer der Maximalwerte der Amplitude zwei unterschiedlichen Pulse des wenigstens einen Positionssignals, insbesondere der größere der Maximalwerte, einer ansteigenden Flanke der Schwingung des Mikroschwingspiegels entsprechen. Der andere der Maximalwerte, insbesondere der kleinere Maximalwert, kann einer absteigenden Flanke der Schwingung des Mikroschwingspiegel entsprechen. Auf diese Weise kann ein Zeitintervall zwischen der aktiven Auslenkung des Mikroschwingspiegels mithilfe eines Pulses des wenigstens einen Ansteuersignals und dem Rückschwingen des Mikroschwingspiegels nach abschalten des Pulses erfasst werden.

Mit einem Schwellwert, welcher amplitudenmäßig unterhalb der Maximalwerte der Amplituden der Pulse des wenigstens einen Positionssignals vorgegeben wird, kann die gesamte Schwingungsperiode oder nur ein Teil Schwingungsperiode des Mikroschwingspiegels erfasst werden. Der wenigstens eine Schwellwert kann unterhalb des kleinsten der Maximalwerte der Amplituden der Pulse des wenigstens einen Positionssignals vorgegeben werden.

Bei einer weiteren vorteilhaften Ausgestaltung des Verfahrens kann ein Zeitintervall zwischen einem Durchlauf des wenigstens einen Positionssignals durch einen Schwellwert und einem Durchlauf des wenigstens einen Positionssignals durch denselben Schwellwert in der nächsten Periode des wenigstens einen Positionssignals ermittelt werden und daraus eine Periodendauer der Schwingung des Mikroschwingspiegels ermittelt werden. Auf diese Weise kann mit nur einem Schwellwert die Periodendauer der Schwingung des Mikroschwingspiegels ermittelt werden.

Vorteilhafterweise kann das Zeitintervall zwischen dem Durchlauf des wenigstens einen Positionssignals durch den Schwellwert und dem Durchlauf durch denselben Schwellwert in der nächsten Periode in derselben Flanke, insbesondere der absteigenden Flanke oder der ansteigenden Flanke, des wenigstens einen Positionssignals ermittelt werden. Auf diese Weise entspricht das Zeitintervall genau der Periode des wenigstens einen Positionssignals.

Erfindungsgemäß wird ein Zeitintervall zwischen einem Durchlauf des wenigstens einen Positionssignals durch einen ersten Schwellwert und dem nächsten Durchlauf durch einen zweiten Schwellwert ermittelt und daraus eine Auslenkung des Mikroschwingspiegels ermittelt. Auf diese Weise kann während eines Pulses des wenigstens einen Positionssignals mithilfe von zwei Schwellwerten die Auslenkung des Mikroschwingspiegels ermittelt werden. So werden die Durchläufe in derselben Flanke, insbesondere der ansteigenden Flanke oder der absteigenden Flanke, der Schwingung des Mikroschwingspiegels erfasst.

Der erste Schwellwert kann dabei amplitudenmäßig zwischen Maximalwerten der Amplituden von zwei unterschiedlichen Pulsen des wenigstens einen Positionssignals vorgegeben werden. Der zweite Schwellwert kann amplitudenmäßig unterhalb des kleinsten der Maximalwerte der Amplituden der Pulse des wenigstens einen Positionssignals vorgegeben werden.

Erfindungsgemäß werden die Durchläufe in derselben Flanke, insbesondere der absteigenden Flanke oder der ansteigenden Flanke, des wenigstens einen Positionssignals ermittelt. Auf diese Weise kann eine Steigung des Verlaufs des wenigstens einen Positionssignals ermittelt werden.

Bei einer weiteren vorteilhaften Ausgestaltung des Verfahrens kann ein Zeitintervall zwischen einem Durchlauf des wenigstens einen Positionssignals in einem Abstiegspuls des wenigstens einen Positionssignals durch einen Schwellwert und einem Durchlauf des wenigstens einen Positionssignals durch denselben Schwellwert in dem nächsten Anstiegspuls des wenigstens einen Positionssignals ermittelt werden
- und/oder ein Zeitintervall zwischen einem Durchlauf des wenigstens einen Positionssignals in einem Anstiegspuls des wenigstens einen Positionssignals durch einen Schwellwert und einem Durchlauf des wenigstens einen Positionssignals durch denselben Schwellwert in dem nächsten Abstiegspuls des wenigstens einen Positionssignals ermittelt werden
- und aus dem wenigstens ein Zeitintervall ein Phasenbeziehung zwischen dem wenigstens einen Ansteuersignal und dem wenigstens einen Positionssignal ermittelt werden.

Auf diese Weise kann aus der Phasenbeziehung insbesondere ein Tastverhältnis des Ansteuersignals so angepasst werden, dass der Mikroschwingspiegel in seiner Resonanzfrequenz betrieben werden kann.

Vorteilhafterweise kann wenigstens ein Zeitintervall zwischen den Durchläufen durch einen durch die Nulllinie des wenigstens einem Positionssignals definierten Schwellwert ermittelt werden.

Bei einer weiteren vorteilhaften Ausgestaltung des Verfahrens kann
- wenigstens ein Durchlauf des wenigstens einen Positionssignals durch den wenigstens einen Schwellwert in wenigstens einer absteigenden Flanke des wenigstens einen Positionssignals erfasst werden,
- und/oder wenigstens ein Durchlauf des wenigstens einen Positionssignals durch den wenigstens einen Schwellwert in wenigstens einer aufsteigenden Flanke des wenigstens einen Positionssignals erfasst werden. Auf diese Weise kann eine Reproduzierbarkeit der Messungen verbessert werden.

Bei einer weiteren vorteilhaften Ausgestaltung des Verfahrens kann wenigstens ein Schwellwert mit wenigstens einem Digital-Analog-Wandler und/oder wenigstens ein Schwellwert mit wenigstens einem Spannungsteiler erzeugt werden. Digital-Analog-Wandler und Spannungsteiler können einfach und kostengünstig realisiert werden.

Bei einer weiteren vorteilhaften Ausgestaltung des Verfahrens kann wenigstens ein Positionssignal mittels wenigstens einer Vergleichseinrichtung mit wenigstens einem Schwellwert verglichen werden. Mit der wenigstens einen Vergleichseinrichtung können zusätzlich die entsprechenden Zeitintervalle erfasst werden. Bei der wenigstens einen Vergleichseinrichtung kann es sich um einen sogenannten Komparator handeln.

Vorteilhafterweise kann ein sogenannter Multi-Komparator als Vergleichseinrichtung verwendet werden. Mit einem Multi-Komparator kann das wenigstens eine Positionssignal insbesondere gleichzeitig mit mehreren Schwellwerten verglichen werden.

Vorteilhafterweise kann zum Vergleich des wenigstens einen Positionssignals mit wenigstens einem Schwellwert eine schnelle 1-Bit Analog-Digital-Wandlung durchgeführt werden. Auf diese Weise kann eine hohe zeitliche Auflösung erreicht werden.

Bei einer weiteren vorteilhaften Ausgestaltung des Verfahrens kann das wenigstens eine Ansteuersignal auf Basis wenigstens eines pulsweitenmodulierten Signals realisiert werden. Auf diese Weise kann das Tastverhältnis des pulsweitenmodulierten Signals an eine geforderte Winkelauflösung des Mikroschwingspiegels angepasst werden. So kann eine Auflösung einer Amplitude einer analogen Ansteuerspannung für die Antriebseinrichtung des Mikroschwingspiegels entsprechend eingestellt werden.

Aus der Resonanzfrequenz des Mikroschwingspiegels kann eine Anzahl von pulsweitenmodulierten Pulsen für das wenigstens eine Ansteuersignal in einer Schwingungsperiode des Mikroschwingspiegels hergeleitet werden. Ein Auslenkwinkel des Mikroschwingspiegels kann so über das Tastverhältnis des pulsweitenmodulierten Ansteuersignals eingestellt und geregelt werden. Eine Frequenz der Schwingung des Mikroschwingspiegels kann über eine Gesamtzahl der pulsweitenmodulierten Pulse des wenigstens einen Ansteuersignals in einer Periode eingestellt und geregelt werden. Aus dem Tastverhältnis des pulsweitenmodulierten Ansteuersignals ergibt sich eine Amplitude einer Treiberspannung zum Ansteuern der Antriebseinrichtung. Aus der Anzahl der pulsweitenmodulierten Pulse des Ansteuersignals ergibt sich eine Frequenz der Treiberspannung.

Bei einer weiteren vorteilhaften Ausgestaltung des Verfahrens kann wenigstens ein Positionssignal auf Basis einer von der Auslenkung des Mikroschwingspiegels abhängigen Kammkapazität der Antriebseinrichtung realisiert werden. Auf diese Weise kann einfach eine elektrische Größe als Basis für wenigstens ein Positionssignal ermittelt werden. Durch diese Bewegung des Mikroschwingspiegels ändert sich die elektrische Kapazität einer Kammstruktur der Antriebseinrichtung. Die Kammkapazitätsänderung beziehungsweise deren Änderung kann entsprechend erfasst werden und charakterisiert den zeitlichen Verlauf der Spiegelauslenkung des Mikroschwingspiegels.

Die Bewegung des Mikroschwingspiegels kann in Form eines Lade- und Entladestroms infolge der sich ändernden Kammkapazität als Positionsinformation über die Spiegelauslenkung des Mikroschwingspiegels ausgegeben werden. Die Änderung der Kammkapazität kann in eine proportionale elektrische Spannung umgewandelt werden. Dabei kann die Frequenz der Spannung der Schwingfrequenz des Mikroschwingspiegels entsprechen. Die Amplitudenänderung kann ein Maß für die Auslenkung des Mikroschwingspiegels sein.

Vorteilhafterweise kann die Antriebseinrichtung wenigstens einen sogenannten Kammantrieb aufweisen. Auf diese Weise kann die Kammkapazität des Kammantriebs zur Realisierung wenigstens eines Positionssignals beitragen.

Vorteilhafterweise kann der Kammantrieb der Antriebseinrichtung zusätzlich als Messeinrichtung zur Erfassung des wenigstens einen Positionssignals dienen. Auf diese Weise kann auf ein zusätzliche Einrichtung zur Positionserfassung verzichtet werden.

Zusätzlich oder alternativ kann wenigstens ein Positionssignal aus einer von der Kammkapazität verschiedenen Messgröße ermittelt werden, welche die Auslenkung des Mikroschwingspiegels charakterisiert.

Die Aufgabe wird ferner erfindungsgemäß bei der Steuervorrichtung dadurch gelöst, dass die Steuervorrichtung wenigstens eine Vergleichseinrichtung aufweist, mit welcher das wenigstens eine Positionssignal fortwährend mit wenigstens einem Schwellwert verglichen werden kann, mit der Steuervorrichtung wenigstens ein Zeitintervall zwischen wenigstens zwei Durchläufen des wenigstens einen Positionssignals durch wenigstens einen Schwellwert bestimmt werden kann und ausgehend von dem wenigstens einen Zeitintervall das wenigstens eine Ansteuersignal geregelt werden kann.

Erfindungsgemäß kann so auf aufwendige und teure elektronische Bauteile, wie insbesondere schnelle Analog-Digital-Wandler, verzichtet werden.

Bei einer vorteilhaften Ausführungsform kann die Steuervorrichtung wenigstens einen Digital-Analog-Wandler und/oder wenigstens einen Spannungsteiler zur Erzeugung wenigstens eines Schwellwerts aufweisen. Digital-Analog-Wandler und Spannungsteiler können einfach und kostengünstig realisiert werden.

Bei einer weiteren vorteilhaften Ausführungsform kann wenigstens eine Positionserfassungseinrichtung und/oder wenigstens eine Antriebseinrichtung mit wenigstens einer Kammstruktur realisiert sein. Mit einer Kammstruktur kann einfach ein Kammantrieb für die Antriebseinrichtung gebildet werden. Ferner kann eine Kammstruktur der Positionserfassungseinrichtung eine elektrische Kapazität, eine sogenannte Kammkapazität, aufweisen, welche als Maß der Auslenkung des Mikroschwingspiegels erfasst werden kann.

Vorteilhafterweise kann wenigstens eine Positionserfassungseinrichtung und wenigstens eine Antriebseinrichtung mit derselben wenigstens einen Kammstruktur realisiert sein. Auf diese Weise kann ein technischer Aufwand weiter verringert werden.

Vorteilhafterweise kann wenigstens eine Signalerzeugungseinrichtung geeignet sein, um wenigstens ein pulsweitenmoduliertes Ansteuersignal zu erzeugen. Mit einem pulsweitenmodulierten Steuersignal kann die Antriebseinrichtung so angetrieben werden, dass der Mikroschwingspiegel zwischen zwei Maximalauslenkungen hin- und hergeschwenkt werden kann.

Vorteilhafterweise kann die Steuervorrichtung mit einem sogenannten Field Programmable Gate Array (FPGA)-Baustein realisiert sein. Auf diese Weise kann die Steuereinrichtung einfach auch vor Ort angepasst werden.

Vorteilhafterweise kann wenigstens eine Vergleichseinrichtung als Teil eines FPGA-Bausteins realisiert sein. Auf diese Weise kann ein technischer Aufwand, insbesondere ein Bauteilaufwand, weiter verringert werden.

Vorteilhafterweise kann wenigstens eine Vergleichseinrichtung als Komparator in dem FPGA-Baustein realisiert sein. Auf diese Weise kann die wenigstens eine Vergleichseinrichtung auch vor Ort angepasst werden.

Die Aufgabe wird außerdem erfindungsgemäß bei der Umlenkspiegeleinrichtung dadurch gelöst, dass die Steuervorrichtung wenigstens eine Vergleichseinrichtung aufweist, mit welcher das wenigstens eine Positionssignal fortwährend mit wenigstens einem Schwellwert verglichen werden kann, mit der Steuervorrichtung wenigstens ein Zeitintervall zwischen wenigstens zwei Durchläufen des wenigstens einen Positionssignals durch wenigstens einen Schwellwert bestimmt werden kann und ausgehend von dem wenigstens einen Zeitintervall das wenigstens eine Ansteuersignal geregelt werden kann. Erfindungsgemäß wird die Umlenkspiegeleinrichtung mit einfachen, insbesondere kostengünstigen, technischen Mitteln realisiert.

Im Übrigen gelten die im Zusammenhang mit dem erfindungsgemäßen Verfahren, der erfindungsgemäßen Steuervorrichtung und der erfindungsgemäßen Umlenkspiegeleinrichtung und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: ein Fahrzeug in der Vorderansicht, mit einem Laserscanner zur Überwachung eines Überwachungsbereichs in Fahrtrichtung vor dem Fahrzeug;
- Figur 2: einen Schaltungsaufbau einer Umlenkspiegeleinrichtung des Laserscanners aus der Figur 1, mit einem Mikroschwingspiegel und einer Steuerungsvorrichtung für eine Antriebseinrichtung des Mikroschwingspiegels;
- Figur 3: ein Amplituden-Zeit-Diagramm mit den zeitlichen Verläufen eines Ansteuersignals zur Ansteuerung der Antriebseinrichtung, einer Spiegelauslenkung des Mikroschwingspiegels und eines Positionssignals, welches den zeitlichen Verlauf der Spiegelauslenkung des Mikroschwingspiegels charakterisiert;
- Figur 4: das Amplituden-Zeit-Diagramm des Positionssignals entsprechend der Figur 3 und drei Schwellwerten, mit denen das Positionssignal verglichen wird;
- Figur 5: einen Ausschnitt des Amplituden-Zeit-Diagramms aus der Figur 4 im Bereich eines Pulses des Positionssignals.

In den Figuren sind gleiche Bauteile mit gleichen Bezugszeichen versehen.

### Ausführungsform(en) der Erfindung

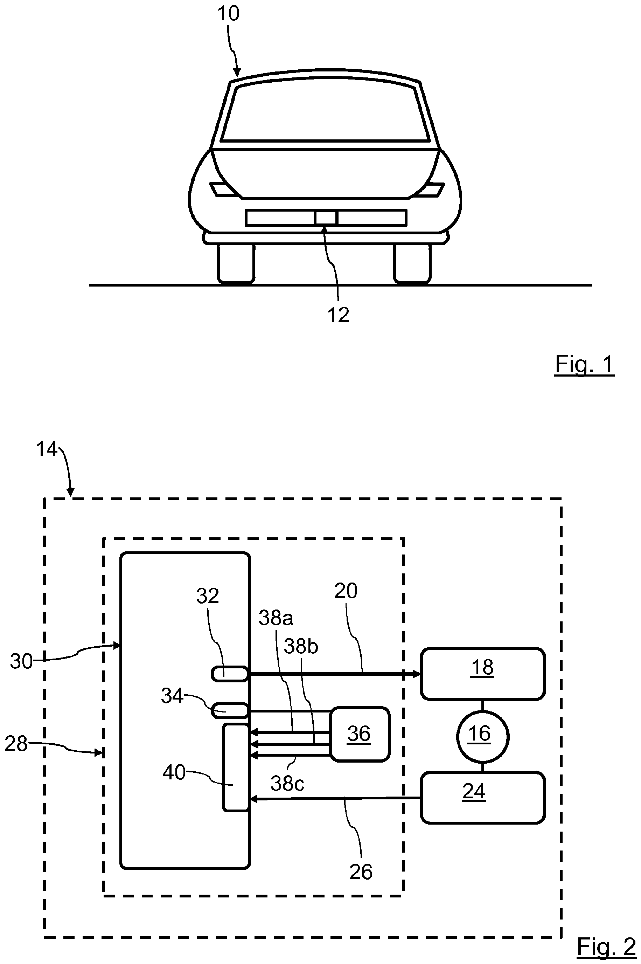

In der Figur 1 ist ein Fahrzeug beispielhaft in Form eines Personenkraftwagens in der Vorderansicht gezeigt. Das Fahrzeug 10 umfasst eine abtastende optische Detektionsvorrichtung beispielhaft in Form eines Laserscanners 12. Der Laserscanner 12 ist beispielhaft in der vorderen Stoßstange des Fahrzeugs 10 angeordnet.

Mit dem Laserscanner 12 kann ein Überwachungsbereich in Fahrtrichtung des Fahrzeugs 10 vor dem Fahrzeug 10 auf Objekte hin überwacht werden. Hierzu kann mit dem Laserscanner 12 der Überwachungsbereich mit entsprechenden Sendesignalen abgetastet werden. Bei Vorhandensein eines Objekts werden die Sendesignale reflektiert und zu dem Laserscanner 12 zurückgesendet. Mit einem entsprechenden Empfänger des Laserscanners 12 werden die reflektierten Signale empfangen.

Der Laserscanner 12 arbeitet nach einem sogenannten Laufzeitverfahren, bei dem eine Laufzeit zwischen dem Aussenden eines Sendesignals und dem Empfang eines reflektierten Sendesignals erfasst und daraus eine Entfernung, eine Geschwindigkeit und/oder eine Richtung des Objekts relativ zum Fahrzeug 10 bestimmt werden kann.

Der Laserscanner 12 weist einen Sender zum Aussenden von Sendesignalen, einen Empfänger zum Empfangen der reflektierten Sendesignale, eine Umlenkspiegeleinrichtung 14 zum Umlenken der Sendesignale und eine Steuer- und Auswerteeinrichtung zur Steuerung des Senders, des Empfängers und der Umlenkspiegeleinrichtung 14 und zum Auswerten von empfangenen Signalen auf. Mit der Umlenkspiegeleinrichtung 14 werden die Strahlrichtungen der Sendesignale in dem Überwachungsbereich geschwenkt, sodass dieser mit den Sendesignalen abgetastet werden kann.

In der Figur 2 ist ein beispielhafter Schaltungsaufbau der Umlenkspiegeleinrichtung 14 gezeigt. Die Umlenkspiegeleinrichtung 14 umfasst einen Mikroschwingspiegel 16. Der Mikroschwingspiegel 16 ist als sogenanntes Mikrosystem-Bauteil ausgelegt, welches in englischsprachigen als Micro-Electro-Mechanical-Systems (MEMS) bezeichnet wird. Der Mikroschwingspiegel 16 ist um eine Schwenkachse so gelagert, dass er zwischen zwei Maximalauslenkungen hin- und hergeschwenkt werden kann.

Der Mikroschwingspiegel 16 ist mit einer Antriebseinrichtung 18 antreibbar verbunden. Die Antriebseinrichtung 18 weist einen sogenannten Kammantrieb auf, mit dem der Mikroschwingspiegel 16 in einer Antriebs-Schwingrichtung antreibbar ist. Ferner weist die Antriebseinrichtung 18 eine Rückstelleinrichtung beispielsweise in Form einer Torsionsfeder auf, mit welcher der Mikroschwingspiegel 16 entgegen der Antriebs-Schwingrichtung zurück bewegt werden kann.

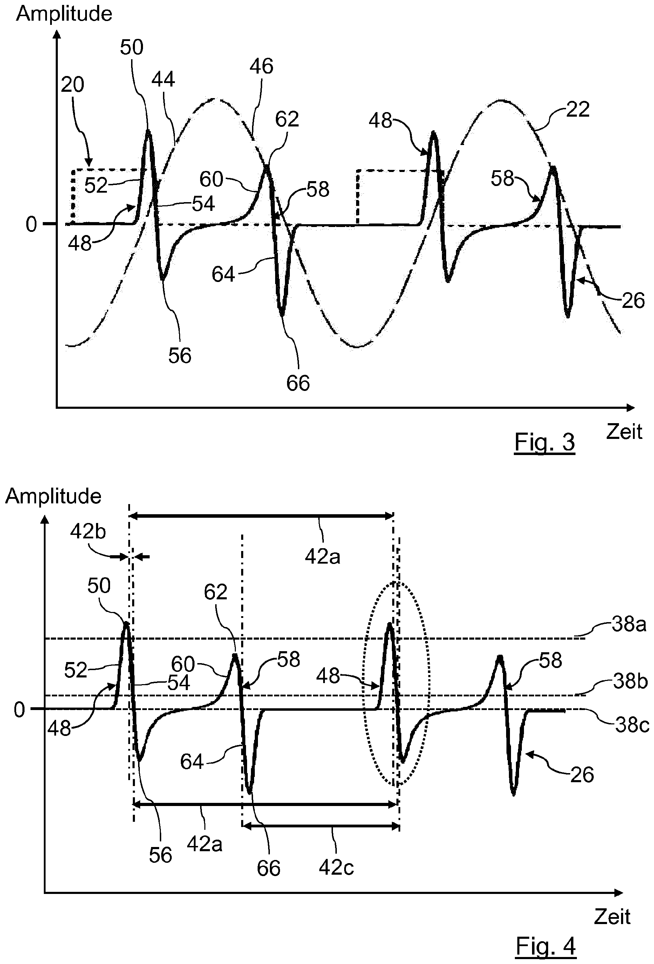

Der Kammantrieb der Antriebseinrichtung 18 wird mit Hochspannung betrieben. Der Kammantrieb ist beispielhaft mit zusammenwirkenden Kammstrukturen ausgestattet, welcher durch Anlegen eines Ansteuersignals 20, das in der Figur 3 gezeigt ist, angesteuert werden kann.

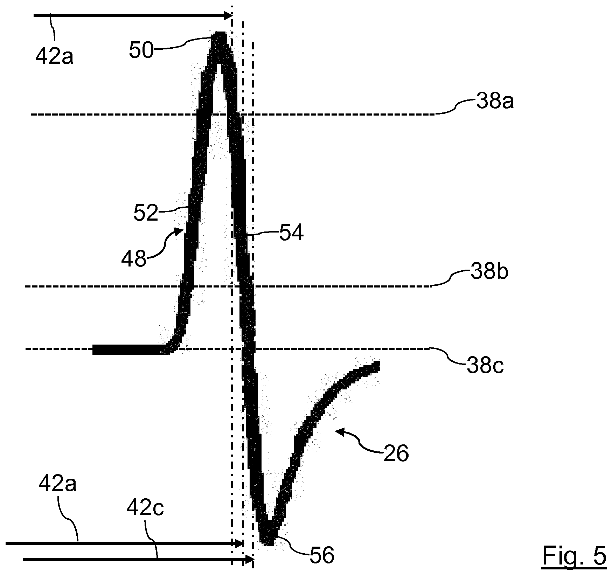

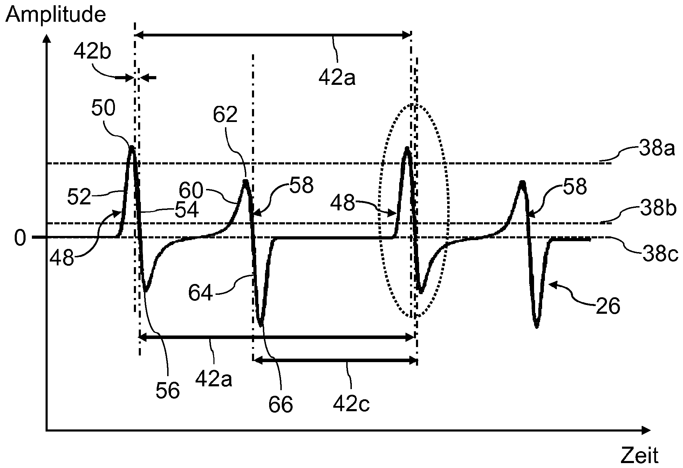

Ferner verfügt die Umlenkspiegeleinrichtung 14 über eine Positionserfassungseinrichtung 24, mit welcher die Spiegelauslenkung 22 im zeitlichen Verlauf erfasst werden kann. Die Positionserfassungseinrichtung 24 nutzt hierfür die Kammstruktur des Kammantriebs der Antriebseinrichtung 18. Dabei wird ein Lade- und Entladestrom in einer sich ändernden Kammkapazität des Kammantriebs aufgrund der Schwingung des Mikroschwingspiegels 16 erfasst. Die Kapazitätsänderung wird in eine proportionale Spannung gewandelt, wobei die Frequenz der Spannung der Spiegelschwingfrequenz und die Amplitudenänderung ein Maß für die Auslenkung des Mikroschwingspiegels 16 ist. Die in eine Amplitudenänderung umgewandelte Kammkapazität wird als Positionssignal 26, welches die Spiegelauslenkung 22 des Mikroschwingspiegel 16 im zeitlichen Verlauf charakterisiert, ausgegeben. Das Positionssignal 26 ist beispielhaft in den Figuren 3 bis 5 gezeigt.

Um die Antriebseinrichtung 18 anzusteuern, ist eine Steuervorrichtung 28 vorgesehen. Mithilfe des Positionssignals 26 wird das Ansteuersignal 20 und damit die Antriebseinrichtung 18 geregelt.

Die Steuervorrichtung 28 ist beispielhaft als sogenannter FPGA -Baustein 30 ausgestaltet. Die Steuervorrichtung 28 umfasst eine Signalerzeugungseinrichtung 32. Mit der Signalerzeugungseinrichtung 32 kann das Ansteuersignal 20 erzeugt werden. Die Signalerzeugungseinrichtung 32 ist signaltechnisch mit der Antriebseinrichtung 18 verbunden.

Ferner umfasst der FPGA-Baustein 30 ein Seriell Peripheres Interface 34 (SPI), welches mit einem außerhalb des FPGA-Bausteins 30 realisierten Digital-Analog-Wandler (D/A-Wandler 36) verbunden ist. Mit dem D/A-Wandler 36 können beispielhaft drei amplitudenmäßige Schwellwerte 38a, 38b und 38c in der Größenordnung des Positionssignals 26 erzeugt werden. Die Schwellwerte 38a, 38b und 38c können dabei variabel einstellbar oder fest vorgegeben sein. Mit dem D/A-Wandler 36 können auch mehr als drei Schwellwerte 38a, 38b und 38c ausgegeben werden.

Der FPGA-Baustein 30 verfügt außerdem über eine Vergleichseinrichtung 40, beispielhaft in Form eines Multi-Komparators, dessen Eingänge mit den Ausgängen des D/A-Wandlers 36 verbunden sind. Der Vergleichseinrichtung 40 können die Schwellwerte 38a, 38b und 38c von dem D/A-Wandler 36 zugeführt werden.

Ein Vergleichseingang der Vergleichseinrichtung 40 ist mit dem Ausgang der Positionserfassungseinrichtung 24 verbunden. Dort kann das Positionssignal 26 angelegt werden.

Mit der Vergleichseinrichtung 40 kann die Amplitude des Positionssignals 26 fortwährend mit den Schwellwerten 38a, 38b und 38c verglichen werden.

Mithilfe der Vergleichseinrichtung 40 können Zeitintervalle 42a, 42b, 42c und 42d zwischen entsprechenden Durchläufen des Positionssignals 26 durch die entsprechenden Schwellwerte 38a, 38b oder 38c bestimmt werden. Ausgehend von den Zeitintervallen 42a, 42b, 42c und 42d kann das Ansteuersignal 20 mit dem FPGA-Baustein 30 geregelt werden.

In der Figur 3 sind die zeitlichen Verläufe des Ansteuersignals 20, der Spiegelauslenkung 22 und des Positionssignals 26 gezeigt. Dabei sind der besseren Übersichtlichkeit wegen ihre jeweiligen Amplituden-Nulllinien aufeinandergelegt. Bezüglich der Maßeinheit und der Größenordnung entsprechen sich die Amplituden des Ansteuersignals 20, der Spiegelauslenkung 22 und des Positionssignals 26 in der Figur 3 nicht. Figur 3 dient lediglich dem Vergleich der jeweiligen zeitlichen Verläufe.

Bei dem Ansteuersignal 20 handelt es sich beispielhaft um ein pulsweitenmoduliertes Signal. Dabei werden in periodischen Abständen unipolare Rechteckpulse erzeugt. Die zeitliche Länge der Pulse ist geringer als die zeitliche Länge der Pause zwischen den Pulsen. Das Verhältnis der Pulsdauer zur Periodendauer wird als Tastverhältnis bezeichnet. Das Tastverhältnis des Ansteuersignals 20 kann in der Signalerzeugungseinrichtung 32 verändert werden.

Durch die Pulse des Ansteuersignals 20 wird der Kammantrieb der Antriebseinrichtung 18 angesteuert, sodass der Mikroschwingspiegel 16 zum Schwingen angeregt wird. Die Spiegelauslenkung 22 ist dabei im zeitlichen Verlauf ein sinusförmiger Schwingungspuls. Dabei bewirkt ein Puls des Ansteuersignals 20 eine ansteigende Flanke 44 der Spiegelauslenkung 22 in Antriebs-Schwingrichtung. Nach Ende des Pulses des Ansteuersignals 20 schwingt der Mikroschwingspiegel 16 weiter in Antriebs-Schwingrichtung zu seiner positiven Maximalauslenkung. Nach Erreichen der positiven Maximalauslenkung kehrt sich die Schwingrichtung des Mikroschwingspiegels 16 um. In einer absteigenden Flanke 46 wird der Mikroschwingspiegel 16 mit der Rückstelleinrichtung entgegen der Antriebs-Schwingrichtung zurück bewegt. Der Mikroschwingspiegel 16 schwingt weiter bis zu seiner negativen Maximalauslenkung, in der Figur 3 unten. Nach Erreichen negativen Maximalauslenkung schwingt der Mikroschwingspiegel 16 in einer folgenden ansteigenden Flanke 44 erneut in Antriebs-Schwingrichtung. Dabei wird der Mikroschwingspiegel 16 mit dem folgenden Puls des Ansteuersignals 20 erneut in Antriebs-Schwingrichtung angetrieben. Ziel der Erfindung ist es, den Mikroschwingspiegel 16 mit dem Ansteuersignal 20 in seiner Resonanzfrequenz anzusteuern. In der Resonanzfrequenz kann der Mikroschwingspiegel 16 effizient mit dem Ansteuersignal 20 angetrieben werden.

Während der Schwingung des Mikroschwingspiegels 16 wird das Positionssignal 26 aus der Kammkapazität des Kammantriebs der Antriebseinrichtung 18 ermittelt. Das Positionssignal 26 umfasst zwei bipolare Pulse, im Folgenden als Anstiegspuls 48 und Abstiegspuls 58 bezeichnet, welche sich periodisch wiederholen. Die Periodizität des Positionssignals 26 entspricht der Periodizität der Spiegelauslenkung 22. Während die Spiegelauslenkung 22 eine ansteigende Flanke 44 durchläuft, wird der Anstiegspuls 48 des Positionssignals 26 zunächst mit einer ansteigende Flanke 52 erzeugt. Der Anstiegspuls 48 weist auf der positiven Seite, in der Figur 3 oben, am Ende der ansteigenden Flanke 52 ein Anstiegsmaximum 50 auf. Das Anstiegsmaximum 50 stimmt zeitlich mit dem Durchlauf der ansteigenden Flanke 44 der Spiegelauslenkung 22 durch die Nulllage des Mikroschwingspiegels 16 überein.

Nach Erreichen des Anstiegsmaximums 50 geht der Anstiegspuls 48 in eine absteigende Flanke 54 über, durchläuft die Nulllinie und erreicht ein Anstiegsminimum 56 unterhalb der Nulllinie des Positionssignals 26. Das Anstiegsmaximum 50, die ansteigende Flanke 52, die absteigende Flanke 54 und das Anstiegsminimum 56 befinden sich zeitlich im Bereich der ansteigenden Flanke 44 der Spiegelauslenkung 22.

Während die Spiegelauslenkung 52 auf ihre positive Maximalauslenkung zu läuft, steigt das Positionssignal 26 in Richtung seiner Nulllinie an. Im Bereich der Nulllinie weist das Positionssignal 26 einen Wendepunkt auf, welcher zeitlich mit der positiven Maximalauslenkung des Mikroschwingspiegels 15 übereinstimmt.

Das Rückschwingen des Mikroschwingspiegels 16 in der absteigenden Flanke 46 der Spiegelauslenkung 22 bewirkt einen Abstiegspuls 58 des Positionssignals 26. Der Abstiegspuls 58 des Positionssignals 26 weist zunächst eine ansteigende Flanke 60 auf, welche bis zu einem Abstiegsmaximum 62 ansteigt. Im Anschluss an das Abstiegsmaximum 62 geht das Positionssignal 26 in eine absteigende Flanke 64 des Abstiegspuls 58 über. Die absteigende Flanke 64 durchläuft die Nulllinie des Positionssignals 26 und endet in einem Abstiegsminimum 66. Das Abstiegsminimum 66 stimmt zeitlich mit dem Durchlauf der absteigenden Flanke 46 der Spiegelauslenkung 22 durch die Nulllage des Mikroschwingspiegels 16 überein.

Im Anschluss an das Abstiegsminimum 66 steigt die Amplitude des Positionssignals 26 wieder an bis zur Nulllinie.

Der gesamte Abstiegspuls 58 mit der ansteigenden Flanke 60, dem Abstiegsmaximum 62, der absteigenden Flanke 64 und dem Abstiegsminimum 66 befinden sich zeitlich innerhalb der absteigenden Flanke 46 der Spiegelauslenkung 22.

Der Anstiegspuls 48 und Abstiegspuls 58 wiederholen sich mit der Periodizität der Spiegelauslenkung 22.

Um das Tastverhältnis des Ansteuersignals 20 an die Resonanzfrequenz des Mikroschwingspiegels 16 anzupassen, wird das Positionssignal 26 mit den Schwellwerten 38a, 38b und 38c verglichen. Zwischen bestimmten Durchläufen des Positionssignals 26 durch die Schwellwerte 38a, 38b und 38c werden entsprechende Zeitintervalle 42a, 42b und 42c ermittelt. Auf Basis der Zeitintervalle 42a, 42b und 42c wird das Tastverhältnis des Ansteuersignals 20 entsprechend angepasst.

Der erste Schwellwert 38a wird amplitudenmäßig im Bereich zwischen dem Anstiegsmaximum 50 und dem Abstiegsmaximum 62 des Positionssignals 26 vorgegeben. Der zweite Schwellwert 38b wird unterhalb des Abstiegsmaximums 62 des Positionssignals 26, also zwischen der Nulllinie und dem Abstiegsmaximum 62 vorgegeben. Der dritte Schwellwert 38c wird entsprechend der Nulllinie des Positionssignals 26 vorgegeben.

Das Zeitintervall 42a wird zwischen einem Durchlauf des Positionssignals 26 durch den ersten Schwellwert 38a in der absteigenden Flanke 54 des Anstiegspulses 48 und einem Durchlauf des Positionssignals 26 in der absteigenden Flanke 54 des Anstiegspulses 48 durch denselben Schwellwert 38a in der nächsten Periode des Positionssignals 26 ermittelt. Aus dem ersten Zeitintervall 42a wird die Periodendauer der Schwingung des Mikroschwingspiegels 16 ermittelt.

Alternativ oder zusätzlich kann das erste Zeitintervall 42a zwischen einem Durchlauf des Positionssignals 26 durch den zweiten Schwellwert 38b in der absteigenden Flanke 54 des Anstiegspulses 48 und einem Durchlauf des Positionssignals 26 in der absteigenden Flanke 54 des Anstiegspulses 48 durch denselben Schwellwert 38b in der nächsten Periode des Positionssignals 26 ermittelt werden.

Das zweite Zeitintervall 42b wird zwischen einem Durchlauf des Positionssignals 26 durch den ersten Schwellwert 38a in der absteigenden Flanke 54 des Anstiegspulses 48 und dem nächsten Durchlauf durch den zweiten Schwellwert 38b in derselben absteigenden Flanke 54 des Anstiegspulses 48 ermittelt. Aus dem zweiten Zeitintervall 42b wird die Auslenkung des Mikroschwingspiegels 16 bestimmt.

Das dritte Zeitintervall 42c wird zwischen einem Durchlauf des Positionssignals 26 durch den dritten Schwellwert 38c in der absteigenden Flanke 64 des Abstiegspulses 58 und einem Durchlauf des Positionssignals 26 durch denselben Schwellwert 38c in der absteigenden Flanke 54 des nächsten Anstiegspulses 48 des Positionssignals 26 ermittelt. Aus dem dritten Zeitintervall 42c wird eine Phasenbeziehung zwischen dem Ansteuersignal 20 und dem Positionssignal 26 ermittelt.

Auf Basis der Zeitintervalle 42a, 42b und 42c, also der Periodendauer, der Auslenkung und der Phasenbeziehung, wird das Ansteuersignal 20 entsprechend geregelt, sodass der Mikroschwingspiegel 16 in seiner Resonanzfrequenz angetrieben wird.

Optional können die Schwellwerte 38a, 38b und 38c variabel angepasst werden. Beispielsweise können die Schwellwerte 38a, 38b und 38c in einer Anfangsphase beim Betreiben der Umlenkspiegeleinrichtung 14 angepasst werden. So können beispielsweise Fertigungstoleranzen beim Mikroschwingspiegel 16 besser ausgeglichen werden.

## Patentansprüche

1. Verfahren zur Steuerung einer Antriebseinrichtung (18) eines Mikroschwingspiegels (16), bei dem
- wenigstens ein Ansteuersignal (20) erzeugt und damit die Antriebseinrichtung (18) so angesteuert wird, dass diese den Mikroschwingspiegel (16) schwingend antreibt,
- wenigstens ein die Auslenkung (22) des Mikroschwingspiegels (16) charakterisierendes Positionssignal (26) erfasst wird,
- das wenigstens eine Ansteuersignal (20) auf Basis des wenigstens einen Positionssignals (26) so geregelt wird, dass der Mikroschwingspiegel (16) in seiner Resonanzfrequenz angetrieben wird,
**dadurch gekennzeichnet, dass**
die Amplitude des wenigstens einen Positionssignals (26) fortwährend mit wenigstens einem Schwellwert (38a, 38b, 38c) verglichen wird und wenigstens ein Zeitintervall (42a, 42b, 42c) zwischen wenigstens zwei Durchläufen des wenigstens einen Positionssignals (26) durch wenigstens einen Schwellwert (38a, 38b, 38c) bestimmt wird und ausgehend von dem wenigstens einen Zeitintervall (42a, 42b, 42c) das wenigstens eine Ansteuersignal (20) geregelt wird, wobei ein Zeitintervall (42b) zwischen einem Durchlauf des wenigstens einen Positionssignals (26) durch einen ersten Schwellwert (38a) und dem nächsten Durchlauf durch einen zweiten Schwellwert (38b) in derselben Flanke ermittelt wird und daraus eine Auslenkung (22) des Mikroschwingspiegels (16) ermittelt wird.

2. Verfahren nach Anspruch 1, **dadurch gekennzeichnet, dass** wenigstens ein Schwellwert (38a, 38b, 38c) konstant vorgegeben wird und/oder wenigstens ein Schwellwert (38a, 38b, 38c) variabel eingestellt wird.

3. Verfahren nach Anspruch 1 oder 2, **dadurch gekennzeichnet, dass** ein Nulldurchgang des wenigstens einen Positionssignals (26) als ein Schwellwert (38c) vorgegeben wird,
- und/oder wenigstens ein Schwellwert (38a) zwischen Maximalwerten (50, 62) der Amplitude des wenigstens einen Positionssignals (26) vorgegeben wird,
- und/oder wenigstens ein Schwellwert (38b) amplitudenmäßig unterhalb den Maximalwerten (50, 62) der Amplituden von unterschiedlichen Pulsen (48, 58) des wenigstens einen Positionssignals (26) vorgegeben wird,
- wobei die Maximalwerte (50, 62) der Amplitude der Pulse (48, 58) des wenigstens einen Positionssignals (26) mit gleichem Vorzeichen während einer Periode des wenigstens einen Positionssignals (26) auftreten.

4. Verfahren nach einem der vorigen Ansprüche, **dadurch gekennzeichnet, dass** ein Zeitintervall (42a) zwischen einem Durchlauf des wenigstens einen Positionssignals (26) durch einen Schwellwert (38a; 38b) und einem Durchlauf des wenigstens einen Positionssignals (26) durch denselben Schwellwert (38a; 38b) in der nächsten Periode des wenigstens einen Positionssignals (26) ermittelt wird und daraus eine Periodendauer der Schwingung des Mikroschwingspiegels (16) ermittelt wird.

5. Verfahren nach einem der vorigen Ansprüche, **dadurch gekennzeichnet, dass** ein Zeitintervall (42c) zwischen einem Durchlauf des wenigstens einen Positionssignals (26) in einem Abstiegspuls (58) des wenigstens einen Positionssignals (26) durch einen Schwellwert (38c) und einem Durchlauf des wenigstens einen Positionssignals (26) durch denselben Schwellwert (38c) in dem nächsten Anstiegspuls (48) des wenigstens einen Positionssignals (26) ermittelt wird
- und/oder ein Zeitintervall zwischen einem Durchlauf des wenigstens einen Positionssignals in einem Anstiegspuls des wenigstens einen Positionssignals durch einen Schwellwert und einem Durchlauf des wenigstens einen Positionssignals durch denselben Schwellwert in dem nächsten Abstiegspuls des wenigstens einen Positionssignals ermittelt wird
- und aus dem wenigstens ein Zeitintervall (42c) ein Phasenbeziehung zwischen dem wenigstens einen Ansteuersignal (20) und dem wenigstens einen Positionssignal (26) ermittelt wird.

6. Verfahren nach einem der vorigen Ansprüche, **dadurch gekennzeichnet, dass**
- wenigstens ein Durchlauf des wenigstens einen Positionssignals (26) durch den wenigstens einen Schwellwert (38a, 38b, 38c) in wenigstens einer absteigenden Flanke (54, 64) des wenigstens einen Positionssignals (26) erfasst wird,
- und/oder wenigstens ein Durchlauf des wenigstens einen Positionssignals durch den wenigstens einen Schwellwert in wenigstens einer aufsteigenden Flanke des wenigstens einen Positionssignals erfasst wird.

7. Verfahren nach einem der vorigen Ansprüche, **dadurch gekennzeichnet, dass** wenigstens ein Schwellwert (38a, 38b, 38c) mit wenigstens einem Digital-Analog-Wandler und/oder wenigstens ein Schwellwert mit wenigstens einem Spannungsteiler erzeugt wird.

8. Verfahren nach einem der vorigen Ansprüche, **dadurch gekennzeichnet, dass** wenigstens ein Positionssignal (26) mittels wenigstens einer Vergleichseinrichtung (40) mit wenigstens einem Schwellwert (38a, 38b, 38c) verglichen wird.

9. Verfahren nach einem der vorigen Ansprüche, **dadurch gekennzeichnet, dass** das wenigstens eine Ansteuersignal (20) auf Basis wenigstens eines pulsweitenmodulierten Signals realisiert wird.

10. Verfahren nach einem der vorigen Ansprüche, **dadurch gekennzeichnet, dass** wenigstens ein Positionssignal (26) auf Basis einer von der Auslenkung (22) des Mikroschwingspiegels (16) abhängigen Kammkapazität der Antriebseinrichtung (18) realisiert wird.

11. Steuervorrichtung (28) zur Steuerung wenigstens einer Antriebseinrichtung (18) eines Mikroschwingspiegels (16),
- mit wenigstens einer Signalerzeugungseinrichtung (32) zur Erzeugung wenigstens eines Ansteuersignals (20), mit welchem die wenigstens eine Antriebseinrichtung (18) angesteuert wird,
- mit wenigstens einer Positionserfassungseinrichtung (24), mit welcher wenigstens ein Positionssignal (26) erfasst wird, welches eine Auslenkung (22) des Mikroschwingspiegels (16) charakterisiert,
- und mit wenigstens einer Einrichtung (40), welche mit der wenigstens einen Signalerzeugungseinrichtung (32) regelbar so verbunden ist, dass der Mikroschwingspiegel (16) in seiner Resonanzfrequenz angetrieben wird,
**dadurch gekennzeichnet, dass**
die Steuervorrichtung (28) wenigstens eine Vergleichseinrichtung (40) aufweist, mit welcher das wenigstens eine Positionssignal (26) fortwährend mit wenigstens einem Schwellwert (38a, 38b, 38c) verglichen wird, mit der Steuervorrichtung (28) wenigstens ein Zeitintervall (42a, 42b, 42c) zwischen wenigstens zwei Durchläufen des wenigstens einen Positionssignals (26) durch wenigstens einen Schwellwert (38a, 38b, 38c) bestimmt wird und ausgehend von dem wenigstens einen Zeitintervall (42a, 42b, 42c) das wenigstens eine Ansteuersignal (20) geregelt wird, wobei ein Zeitintervall (42b) zwischen einem Durchlauf des wenigstens einen Positionssignals (26) durch einen ersten Schwellwert (38a) und dem nächsten Durchlauf durch einen zweiten Schwellwert (38b) in derselben Flanke ermittelt wird und daraus eine Auslenkung (22) des Mikroschwingspiegels (16) ermittelt wird.

12. Steuervorrichtung nach Anspruch 11, **dadurch gekennzeichnet, dass** die Steuervorrichtung wenigstens einen Digital-Analog-Wandler (36) und/oder wenigstens einen Spannungsteiler zur Erzeugung wenigstens eines Schwellwerts (38a, 38b, 38c) aufweist.

13. Steuervorrichtung nach Anspruch 11 oder 12, **dadurch gekennzeichnet, dass** wenigstens eine Positionserfassungseinrichtung (24) und/oder wenigstens eine Antriebseinrichtung (18) mit wenigstens einer Kammstruktur realisiert ist.

14. Umlenkspiegeleinrichtung (14) einer optischen Detektionsvorrichtung (12) mit
- wenigstens einem Mikroschwingspiegel (16),
- wenigstens einer Antriebseinrichtung (18) für den wenigstens einen Mikroschwingspiegel (16) und
- einer Steuervorrichtung (28) zur Steuerung der wenigstens einen Antriebseinrichtung (18),
- wobei die Steuervorrichtung (28) aufweist
- wenigstens eine Signalerzeugungseinrichtung (32) zur Erzeugung wenigstens eines Ansteuersignals (20), mit welchem die wenigstens eine Antriebseinrichtung (18) angesteuert wird,
- wenigstens eine Positionserfassungseinrichtung (24), mit welcher wenigstens ein Positionssignal (26) erfasst wird, welches eine Auslenkung (22) des Mikroschwingspiegels (16) charakterisiert,
- und wenigstens eine Einrichtung (40), welche mit der wenigstens einen Signalerzeugungseinrichtung (32) regelbar so verbunden ist, dass der Mikroschwingspiegel (16) in seiner Resonanzfrequenz angetrieben wird,
**dadurch gekennzeichnet, dass**
die Steuervorrichtung (28) wenigstens eine Vergleichseinrichtung (40) aufweist, mit welcher das wenigstens eine Positionssignal (26) fortwährend mit wenigstens einem Schwellwert (38a, 38b, 38c) verglichen wird, mit der Steuervorrichtung (28) wenigstens ein Zeitintervall (42a, 42b, 42c) zwischen wenigstens zwei Durchläufen des wenigstens einen Positionssignals (26) durch wenigstens einen Schwellwert (38a, 38b, 38c) bestimmt wird und ausgehend von dem wenigstens einen Zeitintervall (42a, 42b, 42c) das wenigstens eine Ansteuersignal (20) geregelt wird, wobei ein Zeitintervall (42b) zwischen einem Durchlauf des wenigstens einen Positionssignals (26) durch einen ersten Schwellwert (38a) und dem nächsten Durchlauf durch einen zweiten Schwellwert (38b) in derselben Flanke ermittelt wird und daraus eine Auslenkung (22) des Mikroschwingspiegels (16) ermittelt wird.

## Claims

1. Method for controlling a drive apparatus (18) of a micro-oscillation mirror (16), in which
- at least one actuation signal (20) is generated, and the drive apparatus (18) is actuated therewith in such a way that it drives the micro-oscillation mirror (16) in an oscillating fashion,
- at least one position signal (26) which characterizes the deflection (22) of the micro-oscillation mirror (16) is sensed,
- the at least one actuation signal (20) is closed-loop controlled on the basis of the at least one position signal (26) in such a way that the micro-oscillation mirror (16) is driven at its resonant frequency,
**characterized in that**
the amplitude of the at least one position signal (26) is continuously compared with at least one threshold value (38a, 38b, 38c), and at least one time interval (42a, 42b, 42c) between at least two passes of the at least one position signal (26) through at least one threshold value (38a, 38b, 38c) is determined, and the at least one actuation signal (20) is closed-loop controlled on the basis of the at least one time interval (42a, 42b, 42c), wherein a time interval (42b) between a pass of the at least one position signal (26) through a first threshold value (38a) and the next pass through a second threshold value (38b) on the same edge is determined and a deflection (22) of the micro-oscillation mirror (16) is determined therefrom.

2. Method according to Claim 1, **characterized in that** at least one threshold value (38a, 38b, 38c) is predefined to a constant value and/or at least one threshold value (38a, 38b, 38c) is set in a variable fashion.

3. Method according to Claim 1 or 2, **characterized in that** a zero crossing of the at least one position signal (26) is predefined as a threshold value (38c),
- and/or at least one threshold value (38a) is predefined between maximum values (50, 62) of the amplitude of the at least one position signal (26),
- and/or the amplitude of at least one threshold value (38b) is predefined below the maximum values (50, 62) of the amplitudes of different pulses (48, 58) of the at least one position signal (26),
- wherein the maximum values (50, 62) of the amplitude of the pulses (48, 58) of the at least one position signal (26) occur with the same sign during a period of the at least one position signal (26).

4. Method according to one of the preceding claims, **characterized in that** a time interval (42a) between a pass of the at least one position signal (26) through a threshold value (38a; 38b) and a pass of the at least one position signal (26) through the same threshold value (38a; 38b) in the next period of the at least one position signal (26) is determined, and a period duration of the oscillation of the micro-oscillation mirror (16) is determined therefrom.

5. Method according to one of the preceding claims, **characterized in that** a time interval (42c) between a pass of the at least one position signal (26) at a falling pulse (58) of the at least one position signal (26) through a threshold value (38c) and a pass of the at least one position signal (26) through the same threshold value (38c) at the next rising pulse (48) of the at least one position signal (26) is determined,
- and/or a time interval between a pass of the at least one position signal at a rising pulse of the at least one position signal through a threshold value and a pass of the at least one position signal through the same threshold value at the next falling pulse of the at least one position signal is determined,
- and a phase relationship between the at least one actuation signal (20) and the at least one position signal (26) is determined from the at least one time interval (42c).

6. Method according to one of the preceding claims, **characterized in that**
- at least one pass of the at least one position signal (26) through the at least one threshold value (38a, 38b, 38c) is sensed in at least one falling edge (54, 64) of the at least one position signal (26),
- and/or at least one pass of the at least one position signal through the at least one threshold value is sensed in at least one rising edge of the at least one position signal.

7. Method according to one of the preceding claims, **characterized in that** at least one threshold value (38a, 38b, 38c) is generated with at least one digital/analogue converter, and/or at least one threshold value is generated with at least one voltage divider.

8. Method according to one of the preceding claims, **characterized in that** at least one position signal (26) is compared with at least one threshold value (38a, 38b, 38c) by means of at least one comparison apparatus (40).

9. Method according to one of the preceding claims, **characterized in that** the at least one actuation signal (20) is implemented on the basis of at least one pulse-width-modulated signal.

10. Method according to one of the preceding claims, **characterized in that** at least one position signal (26) is implemented on the basis of a comb capacitance, dependent on the deflection (22) of the micro-oscillation mirror (16), of the drive apparatus (18).

11. Control device (28) for controlling at least one drive apparatus (18) of a micro-oscillation mirror (16),
- having at least one signal generating apparatus (32) for generating at least one actuation signal (20), with which the at least one drive apparatus (18) is actuated,
- having at least one position sensing apparatus (24) with which at least one position signal (26) which characterizes a deflection (22) of the micro-oscillation mirror (16) is sensed,
- and having at least one apparatus (40) which is connected in a closed-loop controllable fashion to the at least one signal generating apparatus (32) in such a way that the micro-oscillation mirror (16) is driven at its resonant frequency,
**characterized in that**
the control device (28) has at least one comparison apparatus (40) with which the at least one position signal (26) is continuously compared with at least one threshold value (38a, 38b, 38c), at least one time interval (42a, 42b, 42c) between at least two passes of the at least one position signal (26) through at least one threshold value (38a, 38b, 38c) is determined with the control device (28), and the at least one actuation signal (20) is closed-loop controlled on the basis of the at least one time interval (42a, 42b, 42c), wherein a time interval (42b) between a pass of the at least one position signal (26) through a first threshold value (38a) and the next pass through a second threshold value (38b) on the same edge is determined and a deflection (22) of the micro-oscillation mirror (16) is determined therefrom.

12. Control device according to Claim 11, **characterized in that** the control device has at least one digital/analogue converter (36) and/or at least one voltage divider for generating at least one threshold value (38a, 38b, 38c).

13. Control device according to Claim 11 or 12, **characterized in that** at least one position sensing apparatus (24) and/or at least one drive apparatus (18) is implemented with at least one comb structure.

14. Deflector mirror apparatus (14) of an optical detection device (12), having
- at least one micro-oscillation mirror (16),
- at least one drive apparatus (18) for the at least one micro-oscillation mirror (16) and
- a control device (28) for controlling the at least one drive apparatus (18),
- wherein the control device (28) has
- at least one signal generating apparatus (32) for generating at least one actuation signal (20), with which the at least one drive apparatus (18) is actuated,
- at least one position sensing apparatus (24) with which at least one position signal (26) which characterizes a deflection (22) of the micro-oscillation mirror (16) is sensed,
- and at least one apparatus (40) which is connected in a closed-loop controllable fashion to the at least one signal generating apparatus (32) in such a way that the micro-oscillation mirror (16) is driven at its resonant frequency,
**characterized in that**
the control device (28) has at least one comparison apparatus (40) with which the at least one position signal (26) is continuously compared with at least one threshold value (38a, 38b, 38c), at least one time interval (42a, 42b, 42c) between at least two passes of the at least one position signal (26) through at least one threshold value (38a, 38b, 38c) is determined with the control device (28), and the at least one actuation signal (20) is closed-loop controlled on the basis of the at least one time interval (42a, 42b, 42c), wherein a time interval (42b) between a pass of the at least one position signal (26) through a first threshold value (38a) and the next pass through a second threshold value (38b) on the same edge is determined and a deflection (22) of the micro-oscillation mirror (16) is determined therefrom.

## Revendications

1. Procédé permettant de commander un dispositif d'entraînement (18) d'un micromiroir oscillant (16), dans lequel
- au moins un signal d'excitation (20) est généré, et le dispositif d'entraînement (18) est excité par celui-ci de telle sorte qu'il entraîne le micromiroir oscillant (16) en oscillation,
- au moins un signal de position (26) caractérisant la déviation (22) du micromiroir oscillant (16) est détecté,
- ledit au moins un signal d'excitation (20) est régulé sur la base du au moins un signal de position (26) de telle sorte que le micromiroir oscillant (16) est entraîné à sa fréquence de résonance,
**caractérisé en ce que** l'amplitude du au moins un signal de position (26) est comparée en continu avec au moins une valeur seuil (38a, 38b, 38c), et au moins un intervalle de temps (42a, 42b, 42c) entre au moins deux passages du au moins un signal de position (26) par au moins une valeur seuil (38a, 38b, 38c) est déterminé, et en partant du au moins un intervalle de temps (42a, 42b, 42c), ledit au moins un signal d'excitation (20) est régulé, dans lequel un intervalle de temps (42b) entre un passage du au moins un signal de position (26) par une première valeur seuil (38a) et le passage suivant par une deuxième valeur seuil (38b) est établi dans le même flanc, et une déviation (22) du micromiroir oscillant (16) est établie sur cette base.

2. Procédé selon la revendication 1, **caractérisé en ce qu'**au moins une valeur seuil (38a, 38b, 38c) est prédéfinie de manière constante et/ou au moins une valeur seuil (38a, 38b, 38c) est réglée de manière variable.

3. Procédé selon la revendication 1 ou 2, **caractérisé en ce qu'**un passage par zéro du au moins un signal de position (26) est prédéfini comme une valeur seuil (38c),
- et/ou au moins une valeur seuil (38a) est prédéfinie entre des valeurs maximales (50, 62) de l'amplitude du au moins un signal de position (26),
- et/ou au moins une valeur seuil (38b) est prédéfinie en amplitude au-dessous des valeurs maximales (50, 62) des amplitudes de différentes impulsions (48, 58) du au moins un signal de position (26),
- dans lequel les valeurs maximales (50, 62) de l'amplitude des impulsions (48, 58) du au moins un signal de position (26) avec les mêmes signes apparaissent pendant une période du au moins un signal de position (26) .

4. Procédé selon l'une quelconque des revendications précédentes, **caractérisé en ce qu'**un intervalle de temps (42a) entre un passage du au moins un signal de position (26) par une valeur seuil (38a ; 38b) et un passage du au moins un signal de position (26) par la même valeur seuil (38a ; 38b) dans la période suivante du au moins un signal de position (26) est établi, et une durée de période de l'oscillation du micromiroir oscillant (16) est établie sur cette base.

5. Procédé selon l'une quelconque des revendications précédentes, **caractérisé en ce qu'**un intervalle de temps (42c) entre un passage du au moins un signal de position (26) dans une impulsion descendante (58) du au moins un signal de position (26) par une valeur seuil (38c) et un passage du au moins un signal de position (26) par la même valeur seuil (38c) dans l'impulsion montante suivante (48) du au moins un signal de position (26) est établi,
- et/ou un intervalle de temps entre un passage du au moins un signal de position dans une impulsion montante du au moins un signal de position par une valeur seuil et un passage du au moins un signal de position par la même valeur seuil dans l'impulsion descendante suivante du au moins un signal de position est établi,
- et à partir du au moins un intervalle de temps (42c), une relation de phases entre ledit au moins un signal d'excitation (20) et ledit au moins un signal de position (26) est établie.

6. Procédé selon l'une quelconque des revendications précédentes, **caractérisé en ce que**
- au moins un passage du au moins un signal de position (26) par ladite au moins une valeur seuil (38a, 38b, 38c) dans au moins un flanc descendant (54, 64) du au moins un signal de position (26) est détecté,
- et/ou au moins un passage du au moins un signal de position par ladite au moins une valeur seuil dans au moins un flanc montant du au moins un signal de position est détecté.

7. Procédé selon l'une quelconque des revendications précédentes, **caractérisé en ce qu'**au moins une valeur seuil (38a, 38b, 38c) est générée par au moins un convertisseur numérique/analogique, et/ou au moins une valeur seuil est générée par au moins un diviseur de tension.

8. Procédé selon l'une quelconque des revendications précédentes, **caractérisé en ce qu'**au moins un signal de position (26) est comparé au moyen d'au moins un dispositif de comparaison (40) avec au moins une valeur seuil (38a, 38b, 38c).

9. Procédé selon l'une quelconque des revendications précédentes, **caractérisé en ce que** ledit au moins un signal d'excitation (20) est réalisé sur la base d'au moins un signalé modulé en largeur d'impulsion.

10. Procédé selon l'une quelconque des revendications précédentes, **caractérisé en ce qu'**au moins un signal de position (26) est réalisé sur la base d'une capacité de crête du dispositif d'entraînement (18), dépendant de la déviation (22) du micromiroir oscillant (16).

11. Dispositif de commande (28) permettant de commander au moins un dispositif d'entraînement (18) d'un micromiroir oscillant (16), comprenant
- au moins un dispositif de génération de signal (32) pour générer au moins un signal d'excitation (20) qui permet d'exciter ledit au moins un dispositif d'entraînement (18),
- au moins un dispositif de détection de position (24) qui permet de détecter au moins un signal de position (26) qui caractérise une déviation (22) du micromiroir oscillant (16),
- et au moins un dispositif (40) qui est relié audit au moins un dispositif de génération de signal (32) de manière réglable de sorte que le micromiroir oscillant (16) est entraîné à sa fréquence de résonance,
**caractérisé en ce que** le dispositif de commande (28) présente au moins un dispositif de comparaison (40) qui permet de comparer ledit au moins un signal de position (26) en continu avec au moins une valeur seuil (38a, 38b, 38c), **en ce que** le dispositif de commande (28) détermine au moins un intervalle de temps (42a, 42b, 42c) entre au moins deux passages du au moins un signal de position (26) par au moins une valeur seuil (38a, 38b, 38c), et en partant du au moins un intervalle de temps (42a, 42b, 42c), ledit au moins un signal d'excitation (20) est régulé, dans lequel un intervalle de temps (42b) entre un passage du au moins un signal de position (26) par une première valeur seuil (38a) et le passage suivant par une deuxième valeur seuil (38b) dans le même flanc est établi, et une déviation (22) du micromiroir oscillant (16) est établie sur cette base.

12. Dispositif de commande selon la revendication 11, **caractérisé en ce que** le dispositif de commande présente au moins un convertisseur numérique/analogique (36) et/ou au moins un diviseur de tension pour générer au moins une valeur seuil (38a, 38b, 38c).

13. Dispositif de commande selon la revendication 11 ou 12, **caractérisé en ce qu'**au moins un dispositif de détection de position (24) et/ou au moins un dispositif d'entraînement (18) sont réalisés avec au moins une structure en peigne.

14. Dispositif de miroir de déviation (14) d'un dispositif de détection optique (12), comprenant
- au moins un micromiroir oscillant (16),
- au moins un dispositif d'entraînement (18) pour ledit au moins un micromiroir oscillant (16), et
- un dispositif de commande (28) pour commander ledit au moins un dispositif d'entraînement (18),
- dans lequel le dispositif de commande (28) présente
- au moins un dispositif de génération de signal (32) pour générer au moins un signal d'excitation (20) qui excite ledit au moins un dispositif d'entraînement (18),
- au moins un dispositif de détection de position (24) qui détecte au moins un signal de position (26) qui caractérise une déviation (22) du micromiroir oscillant (16),
- et au moins un dispositif (40) qui est relié audit au moins un dispositif de génération de signal (32) de façon réglable de sorte que le micromiroir oscillant (16) est entraîné à sa fréquence de résonance,
**caractérisé en ce que** le dispositif de commande (28) présente au moins un dispositif de comparaison (40) qui compare ledit au moins un signal de position (26) en continu avec au moins une valeur seuil (38a, 38b, 38c), **en ce que** le dispositif de commande (28) détermine au moins un intervalle de temps (42a, 42b, 42c) entre au moins deux passages du au moins un signal de position (26) par au moins une valeur seuil (38a, 38b, 38c), et en partant du au moins un intervalle de temps (42a, 42b, 42c), ledit au moins un signal d'excitation (20) est régulé, dans lequel un intervalle de temps (42b) entre un passage du au moins un signal de position (26) par une première valeur seuil (38a) et le passage suivant par une deuxième valeur seuil (38b) dans le même flanc est établi, et une déviation (22) du micromiroir oscillant (16) est établie sur cette base.
